# EUROPÄISCHE PATENTANMELDUNG

(11) **EP 1 396 190 A1**
(43) Veröffentlichungstag der Anmeldung: **10.03.2004**
(21) Anmeldenummer: 03020163.6
(22) Anmeldetag: 05.09.2003
(51) Int. Cl.: A01N 37/16

(54) **Pflanzen- und Bodenschutzmittel**

(30) Priorität: 07.09.2002 DE 10241614
(71) Anmelder: Hinsdorf, Gunter, Dipl.-Ing. (FH), 06766 Wolfen (DE); Schwabe, Hans-Jürgen, Dipl.-Ing. Ök., 06766 Wolfen (DE)
(72) Erfinder: Hinsdorf, Gunter, Dipl.-Ing. (FH), 06766 Wolfen (DE); Schwabe, Hans-Jürgen, Dipl.-Ing. Ök., 06766 Wolfen (DE)
(74) Vertreter: Schulz, Manfred, Dipl.-Ing.

(57) **Zusammenfassung**

Die Erfindung betrifft ein Pflanzen- und Bodenschutzmittel, wobei Peressigsäurelösung CH₃COOOH als Pflanzen- und Bodenschutzmittel, insbesondere zur Bekämpfung von Pilzkrankheiten, im Obst-, Gemüse- und Zierpflanzenanbau sowie in der Landwirtschaft verwendet wird.

Die Erfindung zeichnet sich dadurch aus, dass die Peressigsäurelösung gepuffert ist.

## Beschreibung

Die Erfindung betrifft ein Pflanzen- und Bodenschutzmittel für die Landwirtschaft (Ackerbau) und gärtnerischen Anlagen, vorzugsweise während der Vegetationsperiode.

In feuchtwarmen Jahren treten Pilzkrankheiten wie, Braun- und Krautfäule an Tomaten und Kartoffeln, Kräuselkrankheit an Pfirsichen, Monila-Spitzendürre an Steinobstbeständen, Himbeerrutenkrankheit, falscher Mehltau, Apfelschorf, Wurzelfäule bei Erdbeeren usw. besonders stark auf. Dabei kann es zu Ertragsausfällen bis hin zur Vernichtung der gesamten Kulturen kommen.
Zur Bekämpfung derartiger Pilzkrankheiten sind u. a. Pflanzenschutzmittel, wie "Manep WP", "Funguran", "Euparen" MWG", "Antracol" und "Rosen-Pilzfrei Bocccio" im Angebot. Diese Mittel basieren auf Wirkstoffen mit Schwefel oder Kupferverbindungen. Sie sind in zeitlichen Abständen in der Vegetationsperiode bei Befall einzusetzen, um den schlimmsten Schaden zu vermeiden.

Für bestimmte Pilzkrankheiten gibt es aufgrund von geänderten Zulassungsbestimmungen zumindest in Deutschland überhaupt keine zugelassenen Pflanzenschutzmittel mehr. Dies trifft beispielsweise auf die Kräuselkrankheit bei Pfirsich, Narren- oder Taschenkrankheit bei Pflaume, Birnengitterrost zu. Eine Veröffentlichung in der Mitteldeutschen Zeitung vom 8. Juli 2002 "Jetzt gegen Fäule spritzen" berichtet über dieses Problem.

Peressigsäure CH₃ COOOH ist als Desinfektionsmittel zur Desinfektion von Tanks, Anlagen, Rohrleitungen und von mit Lebensmitteln in Kontakt kommenden Oberflächen bekannt. In der Milchproduktion wird sie speziell zur Melkzeugzwischendesinfektion verwendet. Auch ein Einsatz zur Melkanlagen- und Eutertuchdesinfektion mittels Peressigsäure ist bekannt. Des weiteren findet Peressigsäure in Sonderbereichen der Desinfektion Anwendung.
Gemäß der Druckschrift DE 198 12 591 wurden Lösungen mit Peroxiydcarbonsäure und/oder Wasserstoffperoxidgehalt in der Landwirtschaft eingesetzt. Dabei sollten pflanzenschädliche Mikroorganismen, wie Pilze Viren, Bakterien, Hefen, Algen bekämpft, bzw. ihr Auftreten verhindert werden. Dies wurde beispielsweise insbesondere in Gewächshäusern so praktiziert, dass diese Substanzen dem Bewässerungswasser zugegeben wurden. In dieser Druckschrift ist erwähnt, dass gemäß dem DD-Patent 239 109 die erreichten Ergebnisse unbefriedigend sind und bedingt durch die erforderliche Einsatzmenge eine erhebliche Schädigung der behandelten Pflanzen aufgetreten ist. Die Lösung nach der DE 198 12 591 schlägt daher vor, Percarbonsäurelösung und Wasserstoffperoxid als Bekämpfungsmittel gegen Kleinlebewesen einzusetzen. Die Schädigung der Pflanzen durch Verätzungen wird nicht ausgeschlossen. Einen ähnlichen Einsatz schlägt eine Lösung gemäß der Druckschrift DE 198 12 590 vor.

Aus der Druckschrift DE 39 02 009 ist es bekannt, einer 35%igen wässrigen Wasserstoffperoxidlösung Essigsäure zuzugeben, um Peressigsäure zu erhalten. Der Anteil der Peressigsäure in der Wasserstoffperoxidlösung beträgt 3 bis 5 Prozent und ist damit sehr hoch. Dies und auch der hohe Prozentsatz an Wasserstoffperoxid in der zur Anwendung vorgeschlagenen Lösung führen dazu, dass die Gefahr von Verätzungen der Pflanzen in erheblichen Maße gegeben ist. Der Einsatz ist zudem an die Einhaltung besonderer Sicherheitsmaßnahmen gebunden, was einen Einsatz im freizeitgärtnerischen Bereich nahezu unmöglich macht.

Aus der Druckschrift DE 30 03 875 ist es bekannt, Wasserstoffperoxid und/oder aliphatische Peroxidlösungen als Bodenbehandlungsmittel einzusetzen. Die Behandlung ist ausschließlich darauf eingeschränkt, die Peressigsäure in Mengen von 0,1 bis 20 Prozent mittels entsprechender Geräte in den Boden einzubringen und insbesondere mit dem Boden zu mischen. Aus den Ausführungsbeispielen ergibt sich, dass es besonders vorteilhaft ist, den Boden zu durchfeuchten. Der Einsatz ist insbesondere für Laien bzw. Hobbygärtner oder Siedler nicht ohne Spezialkenntnisse durchführbar und daher auf einen großflächigen und nur durch Spezialisten bewältigbaren Einsatz beschränkt. Die Verteilung bzw. der Verteilungsgrad im bzw. auf dem Boden ist insgesamt unbefriedigend. Die Verätzungsgefahr für den Boden und insbesondere die Pflanzen ist bei Einsatz einer derartigen Lösung aufgrund der hohen Konzentration sehr hoch.

Ausgehend von der Tatsache, dass für den vorbeugenden und den aktiven Pflanzenschutz bei Befallserscheinungen zur Behandlung von Pilzkrankheiten derzeit keine oder nur ungenügend wirksame Pflanzenschutzmittel vorhanden sind, hat es sich die Erfindung zur Aufgabe gemacht, ein Pflanzen- und Bodenschutzmittel gegen Pilzkrankheiten zur Verfügung zu stellen, dass problemlos und von jedermann einsetzbar ist, hochwirksam sowohl bei Befall als auch vorbeugend gegen Pilzkrankheiten der oben beschriebenen Art Verwendung finden kann, ohne eine Schädigung der behandelten Pflanzen, Bäume oder des Bodens durch die Behandlung befürchten zu müssen.

Die Erfindung geht von dem oben beschriebenen Stand der Technik aus und schlägt vor, Peressigsäurelösung CH₃ COOOH mit einer Konzentration von 0,01 Prozent bis 2 Prozent als Pflanzen- und Bodenschutzmittel zur Bekämpfung von Pilzkrankheiten zu verwenden, welches sich dadurch auszeichnet, dass die Peressigsäurelösung gepuffert ist. Die Verwendung von Peressigsäure ist bisher in der Hauptsache als Desinfektionsmittel, jedoch mit sehr hohen Konzentrationen der Säure bekannt. Bereits bei diesen höheren Konzentrationen sind Gesundheitsgefährdungen bei Einhaltung der entsprechenden Sicherheitsvorschriften ausgeschlossen. Für die erfindungsgemäße Verwendung der Peressigsäurelösung sind daher Gefährdungen von vornherein bei Einhaltung der wesentlich geringeren auf den Einsatzfall bestimmten und dafür erprobten Konzentrationen nicht zu befürchten. Überraschend wurde gefunden, dass die Verwendung von Peressigsäurelösung auch als Pflanzen- und Bodenschutzmittel erfolgen kann. Dabei führt die Pufferung dazu, dass die behandelten Pflanzen, Bäume und der Boden nicht verätzt werden. Die Verwendung der Peressigsäure als Pflanzen und Bodenschutzmittel ist dabei mit den dazu bekannten Methoden, wie Spritzen bzw. Benetzen der Pflanzen mit der Peressigsäurelösung bei Befall oder vorbeugend, Gießen des Mittels im Wurzelbereich der Pflanzen bei Befall und vorbeugend, Behandlung des Bodens oder der Bodenverbesserer bei Befall oder vorbeugend möglich. Eine frühzeitige Behandlung in Anzuchtbeeten führt ebenso zum Erfolg wie die Behandlung beim Auftreten von Pilzbefall mittels Spritzen und Gießen. Auftretende Kontaminationen des Bodens nach Umweltkatastrophen mit Pilzen, Kolibakterien oder Pneumokokken und dergleichen sind ebenfalls durch Behandlung der Böden und /oder Pflanzen erfolgreich bekämpfbar. Durch die Pufferung entsteht gleichzeitig eine Erhöhung bzw. Verbesserung des Verteilungsgrades auf den behandelten Flächen der Pflanzen und der Bäume. Damit steht ein gegen Pilzkrankheiten von Zier- und Nutzpflanzen hochwirksames Pflanzenschutzmittel zur Verfügung, dass universell in vielen Bereichen des Pflanzen- und Bodenschutzes in Gärten, der Pflanzenzucht und in der Landwirtschaft zur Behandlung und zur Vorbeugung im Obst- und Gemüsebau einsetzbar ist. Die Pflanzen nehmen bei Einhaltung der vorgegebenen Konzentrationen der Peressigsäurelösung keinen Schaden. Das Wachstum der Pflanzen wird durch die Behandlung sehr positiv beeinflusst. Peressigsäure ist zudem biologisch abbaubar, so dass eine Schädigung der Pflanzen und des Bodens vermieden werden kann.

Entsprechend einer vorteilhaften Ausführungsform der Erfindung ist es vorgesehen Peressigsäurelösung mit einer Konzentration zwischen 0,05 Prozent bis 2 Prozent einzusetzen. Je nach Stärke des Befalls und Art der Pilzerkrankung ist eine Verwendung der Peressigsäurelösung ohne Schädigungen der Obstbäume, Weinreben, Nutz- und Zierpflanzen bzw. Blumen und Nutz- und Ziersträuchern möglich.

Eine vorteilhafte Weiterbildung der Erfindung sieht vor niedrigprozentige Peressigsäurelösung mit einer Konzentration von 0,01 bis 0,5 Prozent als Pflanzenund Bodenschutzmittel wie zuvor beschrieben zu verwenden.

Ein weiterer Aspekt der Erfindung ist dadurch angegeben, dass höherprozentige Peressigsäurelösung mit einer Konzentration von 0,5 Prozent bis 2 Prozent verwendet wird.

Erfindungsgemäß wurde gefunden, dass es von Vorteil ist, wenn die Pufferung der Peressigsäurelösung erst kurz vor der Behandlung der Pflanzen bzw. des Bodens erfolgt. Die getrennte Aufbewahrung beider Substanzen ist leicht und über einen längeren Zeitraum möglich. Die Wirksamkeit der Behandlung wird durch das Ansetzen der Lösung vor dem Einsatz äußerst günstig beeinflusst.

Von Vorteil ist es gemäß einer Weiterbildung der Erfindung, wenn als Pufferung bzw. Pufferlösung eine alkalische Lösung, beispielsweise Natronlauge der Peressigsäurelösung zugegeben wird. Dies ist einen sehr preisgünstige Variante. Die Erfindung ist jedoch nicht auf Natronlauge eingeschränkt. Vielmehr ist es ebenfalls nach der Erfindung vorgesehen andere alkalische Lösungen zur Pufferung zu verwenden.

Von besonderem Vorteil ist dabei, wenn die Natronlauge mit Flüssigkeiten mit oberflächenaktiven Substanzen gemischt ist. Damit wird der Verteilungsgrad der gemischten Substanz auf den Pflanzen, Bäumen und dem Boden günstig beeinflusst.

Weiterhin ist es von Vorteil, wenn die oberflächenaktiven Substanzen biologisch abbaubar sind.

Eine Ausführungsform der Erfindung sieht vor, dass zunächst höherprozentige Peressigsäurelösung als Pflanzen- und/oder Bodenschutzmittel, z. B. bei beginnendem Befall, und zur Nachbehandlung bzw. vorbeugenden Behandlung danach in zeitlich frei wählbaren Abständen, insbesondere während der Vegetationsperiode, niedrigprozentige Peressigsäurelösung verwendet wird.

Erfindungsgemäß wurde auch gefunden, dass es von Vorteil ist, wenn vor, während und nach der Blüte Obstbäume, insbesondere Pflaumen und Pfirsichen, mit einer 0,1 % auf pH 5 - 6 gestellten Peressigsäurelösung gespritzt wird. Vorteilhafter Weise wird dieser Vorgang bei größeren Bäumen und stärkerem Befall mehrfach wiederholt. Diese Verwendung eignet sich insbesondere zur Behandlung der Narren- oder Taschenkrankheit bei Pflaumen sowie der Kräuselkrankheit bei Pfirsichen. Die Behandlung ist auch dann noch wirksam, wenn nicht präventiv gespritzt wurde und ein Befall partiell aufgetreten ist.
Eine vorteilhafte Weiterbildung der Erfindung sieht vor, ausgesiebte Komposterde mit einer 0,2 %igen auf pH 4 - 6 eingestellten Peressigsäure im Gießverfahren zu behandeln. Man nimmt dabei im Verhältnis 2 Gießkannen a 10 l auf ca. 0,400 m³ Erdreich. Die so behandelte Komposterde kann jederzeit auf Blumen- oder Gemüsebeete, oder zur Anzucht im Gewächshaus, zur Anwendung gebracht werden. Eine Übertragung von eventuell im Kompost vorhandener Pilzsporen oder Pilzmyzelien kann damit erfolgreich verhindert werden. Vorteilhafter Weise behandelt man die ausgesiebten noch nicht vollständig kompostierten Bestandteile des Komposthaufens ebenfalls mit der zuvor beschriebnen Lösung in gleicher Konzentration. Damit werden eventuell vorhandene Kontaminationen bereits im Entstehen gehindert.

Die zuvor beschriebene Verwendung kann gemäß einer vorteilhaften Weiterbildung der Erfindung auch derart eingesetzt werden , dass zunächst höherprozentige Peressigsäurelösung auf kontaminierte Böden, vorzugsweise nach dem Auflockern derselben, aufgebracht wird, und dann nach einer frei wählbaren Einwirkzeit mit niedrigprozentiger Peressigsäurelösung nachbehandelt wird.

Eine weitere Ausführungsform der Erfindung sieht vor, dass Peressigsäurelösung zur bekämpfenden und vorbeugenden Behandlung von Pilzkrankheiten an Wurzeln von Pflanzen und Bäumen derart eingesetzt wird, dass der Boden durch Spritzen und/oder Gießen, vorzugsweise nach dem Auflockern des Bodens, im Wurzelbereich behandelt wird.
Erfindungsgemäß wurde auch gefunden, dass es von Vorteil ist, vor, während und nach der Blüte von Obstbäumen zur Vorbeugung gegen einen Befall mit der Monila-Spitzendürre mit einer 0,15 %igen gepufferten (pH 5 - 6) Peressigsäurelösung zu spritzen.

Ein weiterer Aspekt der Erfindung ist dadurch angegeben, dass Obstbäume, insbesondere Birnenbäume vor dem Mausstadium mit einer 0,2 %igen gepufferten Peressigsäurelösung gespritzt werden. Anschließend erfolgt eine Weiterbehandlung durch Spritzen mit einer 0,1 % auf pH 5 - 6 gestellten Peressigsäurelösung. Hierdurch wird Birnenschorf erfolgreich bekämpft.

Gemäß einer vorteilhaften Weiterbildung der Erfindung werden Grauschimmel und Lederfäule an Erdbeeren verhindert. Hierbei erfolgt die Behandlung während der Blüte mit 0,1 %iger gepufferter Peressigsäurelösung im Gießverfahren. Sollten während der Ernte Früchte mit braunen Flecken auftreten, wird erneut gegossen. In besonders feuchten Jahren oder bei sehr dicht stehenden Erdbeerpflanzen kann es doch einmal zu Grauschimmelbefall kommen. Auch hier kann mit gleicher Konzentration gegossen werden. Eine Karenzzeit für die Ernte nach dem Gießen ist nicht notwendig. Lederfäule war nach der Behandlung war nicht mehr festzustellen.

Grauer und falscher Mehltau an Gurken können entsprechend einer Weiterbildung der Erfindung ebenfalls erfolgreich zurückgedrängt werden. Die Behandlung wird während der Blütezeit mit einer 0,1 %igen auf pH 5 - 6 gepufferten Peressigsäurelösung im Gießverfahren durchgeführt. Sie kann bei entsprechender feuchten Wetterlage beim Auftreten von einzelnen grauen Punkten jederzeit wiederholt werden. Nach der Haupternte lässt sich der Welkprozess (brauner Mehltau) durch wöchentliches Gießen erheblich hinausschieben.

Das gleiche Verfahren ist auch bei Zucchini anwendbar. Mittels Gießverfahren zur Blütezeit mit einer 0,1 %igen gepufferten Peressigsäure wird die Pilzbildung bzw. der Pilzbefall verhindert bzw. abgebremst. Die neuen Früchte sind nach der Behandlung wieder gesund. Bei sehr feuchtem Wetter und ggf. beim Anbau unter Bäumen muss deshalb eventuell ein erneuter neuen Gießvorgang durchgeführt werden.

Braunfäule an Bohnen kann in besonders feuchten Jahren bzw. durch eine unsachliche Behandlung beim Gießen (zu scharfer Wasserstrahl) auftreten. Eine Ausführungsform der Erfindung schlägt deshalb vor, während bzw. auch nach der Blüte mit einer 0,1 %igen gepufferten Peressigsäure zu gießen bzw. bei Stangenbohnen zu spritzten. Auch dem Befall der Kartoffeln mit der Braun- und Krautfäule kann mittels dieses Verfahrens vorgebeugt werden. Das gleiche Verfahren wird bei der Bekämpfung der Braunfäule von Tomaten eingesetzt.
Eine vorteilhafte Weiterbildung der Erfindung ist für den Einsatz im Weinbau vorgesehen. Die pilzlichen Infektionen führen am Weinstock am Anfang zur Ausbeulung und zur leichten Braunfärbung des Blätterrandes. Die sich bildende Weinrebe ist sehr ungleichmäßig ausgebildet und es kommt im weiteren Verlauf zum Absterben der Rebe. Die Behandlung erfolgt mit einer gepufferten 0,15 %igen Peressigsäurelösung mittels Durchspritzen auf das Holz des Weinstockes. Im Anschluss erfolgt die Spritzung im Mausstadium. Nach dem Rückschnitt werden die frisch gebildeten Reben erneut, diesmal mit einer 0,1 %igen Peressigsäurelösung, pH 5 - 6, gespritzt. Diese Spritzung kann bis zur Reife jederzeit und mehrfach wiederholt werden.

Die Erfindung betrifft auch ein Pflanzen- und Bodenschutzmittel, welches vorzugsweise der Bekämpfung von Pilzkrankheiten im Obst-, Gemüse- und Zierpflanzenanbau sowie in der Landwirtschaft oder im Weinbau dient, welches insbesondere in einem oder mehreren Verfahren, wie zuvor beschrieben, verwendet wird, welches sich dadurch auszeichnet, dass es aus Peressigsäurelösung mit einer Konzentration zwischen 0,01 bis 2 Prozent und einer basischen Lösung zur Pufferung der Säure besteht.

Dabei ist es von Vorteil, wenn ein Verkaufssatz bzw. ein Verkaufskit für das Pflanzen- und Bodenschutzmittel vorgesehen ist, der wenigstens ein Behältnis für Peressigsäurelösung, wenigstens ein Behältnis für die basische Lösung, wenigstens eine Messeinrichtung, beispielsweise einen Messbecher oder dergleichen, und eine Beschreibung bzw. Bedienungsanleitung zur Herstellung der Mischungen für die unterschiedlichen Anwendungsfälle umfasst.

Die Erfindung wird nachfolgend anhand von Ausführungsbeispielen weiter beschrieben:
1. Sämtliche im Garten anfallende Rückstände werden teilweise geschreddert und kompostiert. Im Frühjahr wird der Komposthaufen über ein Sieb getrennt.
   Der organische, grobe Rest kommt auf den Komposthaufen zurück. Die abgesiebte Erde wird mit einer 0,2 %igen auf pH 4 - 6 eingestellten Peressigsäure im Gießverfahren behandelt (2 Gießkannen a 10 l auf ca. 0,400 m3 Erdreich). Die so behandelte Komposterde kann jederzeit auf Blumen- oder Gemüsebeete, oder zur Anzucht im Gewächshaus, zur Anwendung gebracht werden.
2. Behandlung von Narrenkrankheiten bei Pflaumen. Der Pflaumenbaum wird vor, während und nach der Blüte mit einer 0,1 % auf pH 5 - 6 gestellten Peressigsäurelösung gespritzt. Unter Umständen muss der Vorgang bei größeren Bäumen, falls einzelne Früchte deformiert sind, wiederholt werden.
3. Kräuselkrankheit bei Pfirsichbäumen. Die Spritzung erfolgt in gleicher Formmit der entsprechend 0,1 %ig gepufferten Peressigsäurelösung wie im Beispiel 2. Es besteht hier die Möglichkeit, den Spritzvorgang, falls die vorbeugenden Spritzungen nicht durchgeführt werden konnten, beim Auftreten dieser Krankheit vorzunehmen. Die Kräuselung der Blätter geht spontan zurück und die Mehrheit der jungen Früchte bleibt erhalten.
4. Die Monilia Spitzendürre kann beim Auftreten von Symptomen nicht mehr behandelt werden. Die Spritzung muss deshalb unbedingt vor, während und nach der Blüte mit einer 0,15 %igen gepufferten (pH 5 - 6) Peressigsäurelösung erfolgen.
5. Birnenschorf: Besonders bei älteren Bäumen sind die Äste wulstartig angeschwollen. Die Rinde ist porös. An dieser Stelle sind die Pilzsporen in hohem Maße vertreten. Deshalb muss der Birnenbaum vor dem Mausstadium mit einer 0,2 %igen gepufferten Peressigsäurelösung gespritzt werden. Anschließend erfolgt die normale Behandlung wie im Beispiel 2. Sollten einzelne Blätter durch neue Sporen befallen werden, muss im Abstand von 10 Tagen nachbehandelt werden.
6. Grauschimmel und Lederfäule an Erdbeeren Bei Erdbeeren erfolgt die Behandlung während der Blüte mit 0,1 %iger gepufferter Peressigsäurelösung im Gießverfahren. Sollten während der Ernte Früchte mit braunen Flecken auftreten, sollte erneut gegossen werden. In besonders feuchten Jahren oder bei sehr dicht stehenden Erdbeerpflanzen kann es doch einmal zu Grauschimmelbefall kommen. Auch hier kann mit gleicher Konzentration gegossen werden. Eine Karenzzeit für die Ernte nach dem Gießen ist nicht notwendig. Lederfäule nach der Behandlung war nicht mehr festzustellen.
7. Grauer und falscher Mehltau an Gurken: Die Behandlung wird während der Blütezeit mit einer 0,1 %igen auf pH 5 - 6 gepufferten Peressigsäurelösung im Gießverfahren durchgeführt. Sie kann bei entsprechender feuchten Wetterlage beim Auftreten von einzelnen grauen Punkten jederzeit wiederholt werden. Nach der Haupternte lässt sich der Welkprozess (brauner Mehltau) durch wöchentliches Gießen erheblich hinausschieben.
8. Zucchini, eine immer stärker angebaute Frucht, wird zum Teil durch Grauschimmel befallen bzw. es bilden sich Früchte, die am Ende absterben (schwarze Färbung). Mittels Gießverfahren zur Blütezeit mit einer 0,1 %igen gepufferten Peressigsäure werden diese Vorgänge abgebremst. Die neuen Früchte sind wieder gesund. Bei sehr feuchtem Wetter beim Anbau unter Bäumen muss deshalb besonders aufgepasst werden, um einen neuen Gießvorgang sofort durchzuführen.
9. Braunfäule an Bohnen kann in besonders feuchten Jahren bzw. durch eine unsachliche Behandlung beim Gießen (zu scharfer Wasserstrahl) auftreten. Während bzw. auch nach der Blüte kann mit einer 0,1 %igen gepufferten Peressigsäurelösung gegossen bzw. bei Stangenbohnen gespritzt werden.
10. Kraut- und Braunfäule an Kartoffeln: Nachdem bei den Kartoffeln die ersten Triebe zu sehen sind, kann mit einer 0,1 %igen gepufferten Peressigsäurelösung gespritzt oder gegossen werden. Normalerweise reicht das bis zum normalen Absterben des Krautes aus. Sollten trotzdem einzelne Pflanzen einen braunen Austrieb vor der Blüte zeigen, kann dieser Vorgang problemlos wiederholt werden.
11. Die Behandlung der Braunfäule an Tomaten erfolgt, nachdem die Pflanzlinge den ersten Wachstumsschub zeigen. Es wird mit einer 0,1 %igen gepufferten Peressigsäure gegossen. Hierbei sollte besonders das Erdreich gut durchtränkt werden. Der Gießvorgang kann über die gesamte Pflanze wiederholt werden, sollten braune Stellen an den Pflanzen sichtbar werden. In besonders feuchten Jahren und schlechtem Reifevorgang kann problemlos eine erneute Behandlung während der Ernte erfolgen. Karenzzeit nicht notwendig.
12. Einsatz im Weinbau: Die pilzlichen Infektionen führen am Weinstock am Anfang zur Ausbeulung und zur leichten Braunfärbung des Blätterrandes. Die sich bildende Weinrebe ist sehr ungleichmäßig ausgebildet und es kommt im weiteren Verlauf zum Absterben der Rebe. Die Behandlung erfolgt mit einer gepufferten 0,15 %igen Peressigsäurelösung mittels Durchspritzen auf das Holz des Weinstockes. lm Anschluss erfolgt die Spritzung im Mausstadium. Nach dem Rückschnitt werden die frisch gebildeten Reben erneut, diesmal mit einer 0,1 %igen Peressigsäurelösung, pH 5 - 6, gespritzt. Diese Spritzung kann bis zur Reife jederzeit wiederholt werden.
13. In den letzten Jahren trat verstärkt bei der Stachelbeere amerikanischer Mehltau auf. Die Beere wird großflächig weißgrau und verfärbt sich anschließend schwarz. In kurzer Zeit ist der gesamte Strauch befallen. Hier ist die Behandlung mit 0,1 %iger gepufferten Peressigsäurelösung das Mittel der Wahl. Im Spritzverfahren nach der Blüte ist ein guter Erfolg gegeben.
14. Himbeeren Die Bekämpfung der Grauschimmelfäule an dieser Frucht ist problemlos. Mit einer Spritzung (0,1 %ige gepufferte Peressigsäurelösung) während der Reifezeit hat man dieses Problem gut im Griff.
15. Mehltau an Blumen (Rosen, Flox) kann mittels Spritz- bzw. Gießverfahren mit einer 0,1 %igen gepufferten Peressigsäurelösung gut behandelt werden.
16. Zwiebelgewächse (Tulpen, Lilien oder Gladiolen) sind beim ersten Auftreten von gelben Blättern vor dem Blühen sofort mit einer 0,1 %igen gepufferten Peressigsäurelösung zu gießen. Dies kann jedoch auch vorbeugend bereits vor dem Auftreten entsprechender Befallserscheinungen erfolgen. Der Vorgang kann gegebenenfalls wiederholt werden.
17. Nach Umweltkatastrophen mit Pilzmyzelien, Kolibakterien, Peumokokken und dergleichen kontaminierte landwirtschaftliche Nutzflächen und Gärten lassen sich durch die Behandlung der Böden mit Peressigsäurelösung erfolgreich sanieren. Dies geschieht vorzugsweise dadurch, dass die Böden zunächst von offensichtlich befallenen Oberflächenschichten befreit werden, der Boden dann aufgelockert und mit höherprozentiger Peressigsäurelösung gegossen oder gespritzt wird. Nach einer Einwirkzeit von ein bis zwei Wochen kann dann mit niedrigprozentiger Peressigsäurelösung nachbehandelt werden. Die Böden sind dadurch von schädlichen Pilzen bzw. Pilzmyzelien befreit. Gleichzeitig werden Bakterien und Peumokokken erfolgreich bekämpft.

Die Erfindung wurde zuvor anhand von Ausführungsbeispielen beschrieben. Die jetzt und mit der Anmeldung später eingereichten Ansprüche sind Versuche zur Formulierung ohne Präjudiz für die Erzielung eines weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, könne im Laufe des Verfahrens als von erfindungswesentlicher Bedeutung, zum Beispiel zur Abgrenzung vom Stand der Technik beansprucht werden.

## Patentansprüche

1. Verwendung von Peressigsäurelösung CH₃COOOH als Pflanzen- und Bodenschutzmittel, insbesondere zur Bekämpfung von Pilzkrankheiten, im Obst-, Gemüse- und Zierpflanzenanbau sowie in der Landwirtschaft, wobei Peressigsäurelösung mit einer Konzentration zwischen 0,01 Prozent bis 2 Prozent als Pflanzen- und Bodenschutzmittel verwendet wird,
**dadurch gekennzeichnet, dass** die Peressigsäurelösung gepuffert ist.

2. Verwendung nach einem oder beiden der vorhergehenden Ansprüche,
**dadurch gekennzeichnet, dass** niedrigprozentige Peressigsäurelösung von 0,01 Prozent bis 0,5 Prozent verwendet wird.

3. Verwendung nach einem oder mehreren der vorstehenden Ansprüche,
**dadurch gekennzeichnet, dass** die höherprozentige Peressigsäurelösung von 0,5 Prozent bis 2 Prozent verwendet wird.

4. Verwendung nach einem oder mehreren der vorstehenden Ansprüche,
**dadurch gekennzeichnet, dass** die Pufferung erst kurz vor der Behandlung erfolgt bzw. der Peressigsäurelösung zugegeben wird.

5. Verwendung nach einem oder mehreren der vorstehenden Ansprüche,
**dadurch gekennzeichnet, dass** als Pufferung eine alkalische Lösung, beispielsweise Natronlauge und/oder Natronlauge gemischt mit Flüssigkeiten mit oberflächenaktiven, vorzugsweise biologisch abbaubaren Substanzen verwendet wird.

6. Verwendung nach einem oder mehreren der vorstehenden Ansprüche,
**dadurch gekennzeichnet, dass** zunächst höherprozentige Peressigsäurelösung als Pflanzen- und/oder Bodenschutzmittel, z. B. bei beginnendem Befall, und zur Nachbehandlung bzw. vorbeugenden Behandlung danach in zeitlich frei wählbaren Abständen, insbesondere während der Vegetationsperiode, niedrigprozentige Peressigsäurelösung verwendet wird.

7. Verwendung nach einem oder mehreren der vorstehenden Ansprüche,
**dadurch gekennzeichnet, dass** vor und/oder während und/oder nach der Blüte Obstbäume mit einer 0,1 prozentigen auf pH 5-6 eingestellten Peressigsäurelösung gespritzt und/oder gegossen werden.

8. Verwendung nach einem oder mehreren der vorstehenden Ansprüche,
**dadurch gekennzeichnet, dass** 0,2 prozentige auf pH 4-6 eingestellte Peressigsäurelösung im Verhältnis von 20 I auf ca. 0,4 m³ Erdreich auf Erde, insbesondere durchgesiebte Komposterde, gegossen wird.

9. Verwendung nach einem oder mehreren der vorstehenden Ansprüche,
**dadurch gekennzeichnet, dass** zunächst höherprozentige Peressigsäurelösung auf kontaminierte Böden, vorzugsweise nach dem Auflockern, aufgebracht wird, und nach einer frei wählbaren Einwirkzeit mit niedrigprozentiger Peressigsäurelösung nachbehandelt wird und/oder Peressigsäurelösung zur bekämpfenden und vorbeugenden Behandlung von Pilzkrankheiten an Wurzeln von Pflanzen und Bäumen derart eingesetzt wird, dass der Boden durch Spritzen und/oder Gießen, vorzugsweise nach dem Auflockern des Bodens, im Wurzelbereich behandelt wird.

10. Verwendung nach einem oder mehreren der vorstehenden Ansprüche,
**dadurch gekennzeichnet, dass** Peressigsäurelösung im Gieß- und/oder Spritzverfahren zur Beseitigung von für den Menschen schädlichen Bakterien, wie Kolibakterien, Pneumokokken und dergleichen im Boden und Pflanzenbereich verwendet wird.

11. Verwendung nach einem oder mehreren der vorstehenden Ansprüche,
**dadurch gekennzeichnet, dass** 0,2 prozentige auf pH 4-6 eingestellte Peressigsäurelösung im Gieß- und/oder Spritzverfahren auf die Bäume, Pflanzen und/oder das Erdreich gebracht wird.

12. Verwendung nach einem oder mehreren der vorstehenden Ansprüche,
**dadurch gekennzeichnet, dass** 0,1 prozentige auf pH 4-6 eingestellte Peressigsäurelösung im Gieß- und/oder Spritzverfahren auf die Bäume und/oder Pflanzen und/oder Beete aufgebracht wird.

13. Verwendung nach einem oder mehreren der vorstehenden Ansprüche,
**dadurch gekennzeichnet, dass** 0,1 prozentige gepufferte Peressigsäurelösung im Gieß- und/oder Spritzverfahren auf die Pflanzen und/oder Bäume aufgebracht wird.

14. Verwendung nach einem oder mehreren der vorstehenden Ansprüche,
**dadurch gekennzeichnet, dass** 0,15 prozentige gepufferte Peressigsäurelösung im Spritzverfahren auf den Weinstock, insbesondere bis auf das Holz des Weinstockes gespritzt wird, anschließend, insbesondere im Mausstadium und nach dem eventuellen Rückschnitt der Rebe mit 0,1 prozentiger auf pH 5-6 eingestellter Peressigsäurelösung im Spritzverfahren mindestens einmal nachbehandelt wird.

15. Pflanzen- und Bodenschutzmittel, vorzugsweise zur Bekämpfung von Pilzkrankheiten, im Obst-, Gemüse- und Zierpflanzenanbau sowie in der Landwirtschaft, insbesondere zur Verwendung nach einem oder mehreren der vorhergehenden Ansprüche, bestehend aus Peressigsäurelösung mit einer Konzentration zwischen 0,01 Prozent bis 2 Prozent und einer basischen Lösung zur Pufferung der Säure.

16. Verkaufssatz für ein Pflanzen- und Bodenschutzmittel nach einem oder mehreren der vorherstehenden Ansprüche,
**dadurch gekennzeichnet, dass** der Verkaufssatz wenigstens ein Behältnis für Peressigsäurelösung, wenigstens ein Behältnis für die basische Lösung, wenigstens eine Messeinrichtung und eine Beschreibung mit Mischungsverhältnissen für die unterschiedlichen Anwendungsfälle umfasst.
